(19)

Europäisches
Patentamt
European
Patent Office
Office européen
des brevets

(11) **EP 1 838 105 A1**

(12) **EUROPEAN PATENT APPLICATION**

(43) Date of publication:
26.09.2007 Bulletin 2007/39

(51) Int Cl.:
*H04N 7/26* (2006.01)    *H04N 7/36* (2006.01)

(21) Application number: 07102560.5

(22) Date of filing: 16.02.2007

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **24.02.2006 KR 20060018295
03.01.2007 KR 20070000791**

(71) Applicant: **Samsung Electronics Co., Ltd.
Suwon-si
442-742 Gyeonggi-do (KR)**

(72) Inventor: **Sihn, Kue-hwan
Gyeonggi-do (KR)**

(74) Representative: **Perkins, Dawn Elizabeth et al
Venner Shipley LLP
20 Little Britain
London EC1A 7DH (GB)**

(54) **Video transcoding method and apparatus**

(57) Provided are a method and apparatus for selecting an appropriate reference frame at high speed from a plurality of reference frames when transcoding an input video stream into a different format having a different group of pictures (GOP) structure from that of the input video stream. A transcoder, which transcodes an input video stream into an output video stream, includes a reconstruction unit which reconstructs transform coefficients and a video frame from the input video stream; a selection unit which selects one of a first frame, which is referred to by the video frame, and a second frame, which is located at a different position from the first frame, based on sizes of the transform coefficients; and an encoding unit which encodes the reconstructed video frame by referring to the selected frame.

**FIG. 4**

**Description**

The present invention relates to a video transcoding method and apparatus, and more particularly, to a method of selecting an appropriate reference frame at high speed from a plurality of reference frames when transcoding an input video stream into a different format having a different group of pictures (GOP) structure from that of the input video stream.

The development of information and communication technology (ICT) including the Internet has increased video communication as well as text and voice communication. As conventional text-oriented communication fails to satisfy various needs of users, multimedia services, which can provide various types of information such as text, images and music, have been increased. Due to its large size, multimedia data requires a large-capacity storage medium. In addition, a wide bandwidth is required to transmit the multimedia data. Therefore, a compression coding method is a requisite for transmitting the multimedia data including text, images, and audio.

A basic principle of data compression lies in removing data redundancy. That is, data can be compressed by removing spatial redundancy which has to do with repetition of the same color or object in an image, temporal redundancy which occurs when there is little change between adjacent frames in a moving-image frame or when the same sound repeats in audio, or psychological visual redundancy which takes into consideration insensitivity of human eyesight and perception to high frequency. In a related art video coding method, temporal filtering based on motion compensation is used to remove temporal redundancy of video data, and a spatial transform is used to remove spatial redundancy of the video data.

The result of removing video data redundancy is lossy coded through a predetermined quantization process. Then, the quantization result is finally losslessly coded through an entropy coding process.

Encoded video data may be transmitted to a final terminal and decoded by the final terminal. However, the encoded video data may also be transcoded in consideration of network condition or the performance of the final terminal before being transmitted to the final terminal. For example, if the encoded video data is not appropriate to be transmitted through a current network, a transmission server modifies the signal-to-noise ratio (SNR), frame rate, resolution or coding method (codec) of the video data. This process is called "transcoding."

A related art method of transcoding Motion Picture Experts Group (MPEG)-2 coded video data using an H.264 algorithm may be classified into a conversion method in a frequency domain and a conversion method in a pixel domain. Generally, the conversion method in the frequency domain is used in a transcoding process when there is a high similarity between an input format and an output format, and the conversion method in the pixel domain is used when there is a low similarity between them. In particular, the conversion method in the pixel domain reuses an existing motion vector estimated during an encoding process.

However, if the structure of a GOP or a motion vector referencing method is changed after the transcoding process, it is difficult to use the existing motion vector. For this reason, if a motion vector is recalculated based on images which were reconstructed in the transcoding process, a lot of time and resources may be consumed. If a frame at a distance is referred to in order to avoid such recalculation, a greater residual may be generated than when an immediately previous frame is referred to, thereby increasing bit rate and deteriorating image quality.

That is, when video streams having different GOP structures are transcoded, it is very difficult to determine which frame to use as a reference frame in order to obtain an appropriate trade-off among calculation complexity, image quality, and bit rate.

The present invention provides a method and apparatus for selecting an appropriate reference frame in consideration of transcoding speed and image quality when transcoding an input video stream into an output video stream having a different GOP structure (referencing method) from that of the input video stream.

According to an aspect of the present invention, there is provided a transcoder which transcodes an input video stream into an output video stream. The transcoder includes a reconstruction unit which reconstructs transform coefficients and a video frame from the input video stream; a selection unit which selects one of a first frame, which is referred to by the video frame, and a second frame, which is located at a different position from the first frame, based on sizes of the transform coefficients; and an encoding unit which encodes the reconstructed video frame by referring to the selected frame.

According to another aspect of the present invention, there is provided a method of transcoding an input video stream into an output video stream. The method includes reconstructing transform coefficients and a video frame from the input video stream; selecting one of a first frame, which is referred to by the video frame, and a second frame, which is located at a different position from the first frame, based on sizes of the transform coefficients; and encoding the reconstructed video frame by referring to the selected frame.

The above and other aspects of the present invention will become more apparent by describing in detail exemplary embodiments thereof with reference to the attached drawings, in which:

Figure 1A illustrates a GOP structure of a MPEG-2 video main profile;
Figure 1B illustrates a GOP structure of an H.264 baseline profile;

Figures 2A and 2B illustrate the concept of multiple referencing supported by H.264;
Figures 3A and 3B are diagrams for explaining a method of selecting a reference frame in a transcoding process;
Figure 4 is a block diagram of a transcoder according to an exemplary embodiment of the present invention;
Figure 5 is a block diagram of a reconstruction unit included in the transcoder of Figure 4; and
Figure 6 is a block diagram of an encoding unit included in the transcoder of Figure 4.

The present invention will now be described more fully with reference to the accompanying drawings, in which exemplary embodiments of the invention are shown. The invention may, however, be embodied in many different forms and should not be construed as being limited to the exemplary embodiments set forth herein; rather, these exemplary embodiments are provided so that this disclosure will be thorough and complete, and will fully convey the concept of the invention to those skilled in the art.

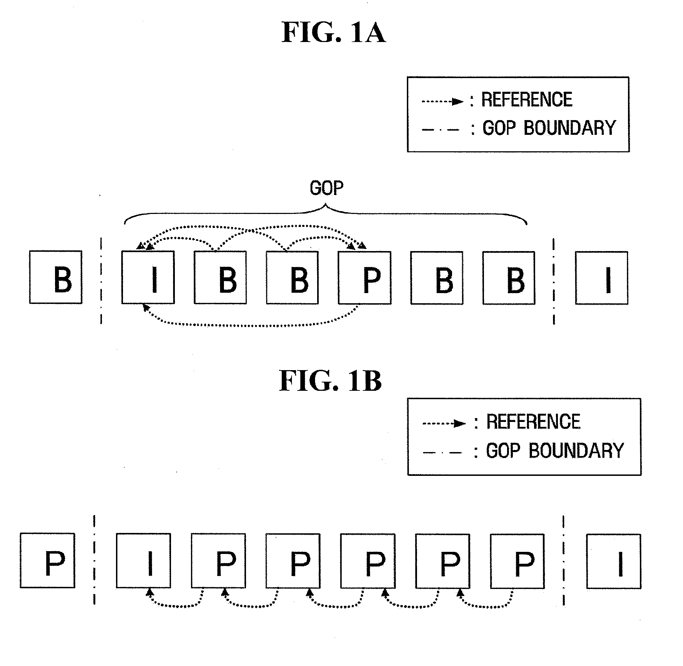

Figure 1A illustrates a GOP structure of a MPEG-2 video main profile. Figure 1B illustrates a GOP structure of an H.264 baseline profile. Referring to Figures 1A and 1B, a bi-directional (B) frame can refer to an intra (I) frame or a predictive (P) frame placed before or after the B frame, but cannot refer to another B frame.

However, the P frame can refer to an I frame or another P frame. Such referencing is generally performed within one GOP structure.

Meanwhile, the H.264 baseline profile has a GOP structure in which a frame refers to its immediately previous frame as illustrated in Figure 1B. Generally, the H.264 baseline profile has a GOP structure in which multiple frames as well as a single frame can be referred to within a single GOP.

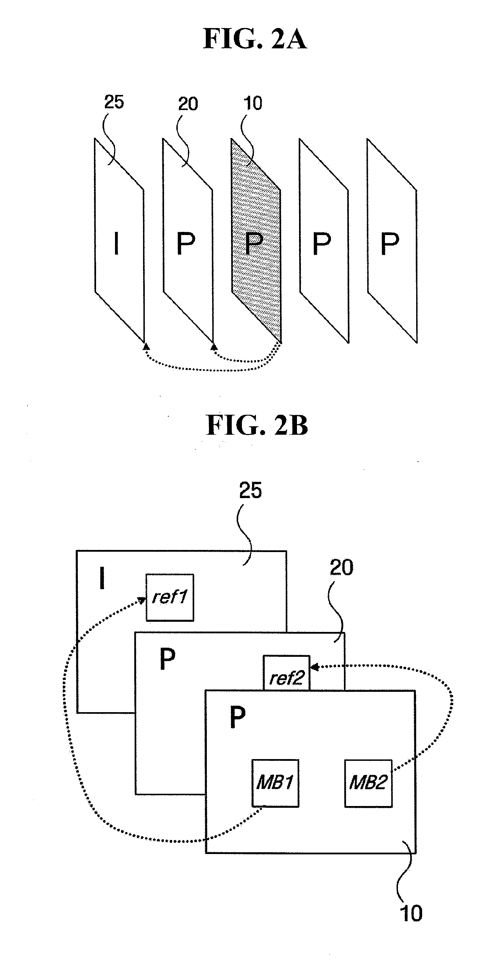

Figures 2A and 2B illustrate the concept of multiple referencing supported by H.264. Referring to Figure 2A, a current P frame 10 can simultaneously refer to a plurality of frames 20 and 25. Such multiple referencing can be carried out, since the estimation of motion vectors and the generation of a residual of a current frame are performed in units of macroblocks, not frames.

Figure 2B illustrates a case where different macroblocks MB1 and MB2 in the current P frame 10 respectively refer to different regions ref1 and ref2 in the different frames 20 and 25. In this way, H.264 offers diversity and adaptability of video coding, since an appropriate reference frame is selected for each macroblock.

In order to transcode an input video illustrated in Figure 1A into an output video having a different GOP structure from that of the input video and illustrated in Figure 2B, a transcoder has to recalculate a motion vector of the input video.

However, if the motion vector is recalculated so that the output video can refer to an immediately previous frame, a lot of calculation time is consumed. On the other hand, if a frame located at a large distance from the output video is referred to using a referencing method of the input video in order to avoid such recalculation, a greater residual may be generated than when an immediately previous frame is referred to, thereby deteriorating image quality or increasing bit rate. Therefore, it is required to find an appropriate trade-off between the amount of calculation and image quality (or bit rate) in a transcoding process.

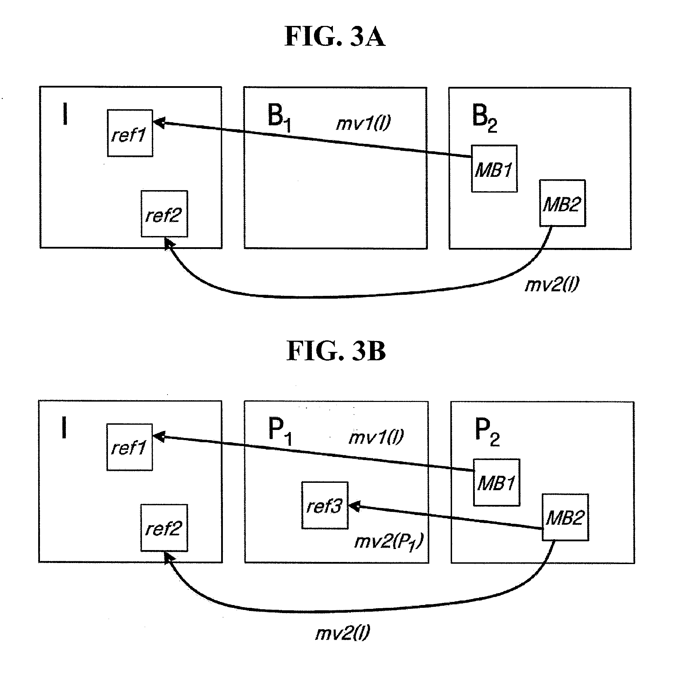

Figures 3A and 3B are diagrams for explaining a method of selecting a reference frame in a transcoding process. Specifically, Figure 3A illustrates the structure of an input video before the transcoding process. Figure 3B illustrates the structure of an output video after the transcoding process. Referring to Figure 3A, a frame currently being processed is $B_2$, and a motion vector indicates an I frame. In an MPEG-2 structure, all forward reference vectors of the $B_2$ frame indicate the I frame. On the other hand, in an H.264 structure as illustrated in Figure 3B, forward motion vectors mv1 and mv2 of macroblocks MB1 and MB2 may indicate an I frame or a $P_1$ frame. If the motion vector mv2 (I) indicating the I frame does not generate a significantly greater residual than the motion vector mv2 ($P_1$) indicating the $P_1$ frame, it may be advantageous to select the motion vector mv2 (I) in order to increase calculation speed. If the motion vector mv2 (I) generates a significantly greater residual than the motion vector mv2 ($P_1$), it may be advantageous to select the motion vector mv2 ($P_1$).

According to an exemplary embodiment of the present invention, there is provided a method of selecting an appropriate reference frame for a transcoding process in which a GOP structure is changed. That is, there is provided a method of determining a reference frame of an input video or an immediately previous frame as a reference frame for a transcoding process when the specification of an output video supports multiple referencing as in H.264. If the reference frame of the input video is used, an existing motion vector of the input video can be reused, thereby making high-speed conversion possible. If a new reference frame is used, a lot of calculation is required, but superior image quality can be achieved. In this regard, optimal transcoding may be performed by finding an appropriate trade-off between transcoding speed and image quality.

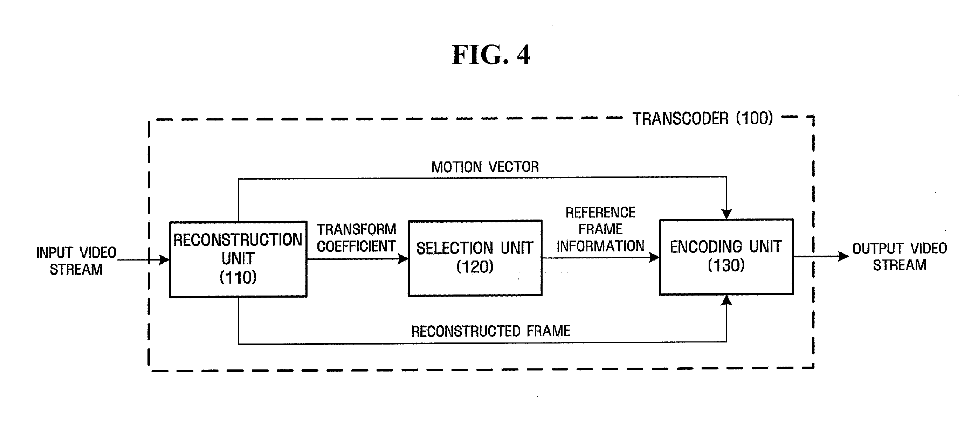

Figure 4 is a block diagram of a transcoder according to an exemplary embodiment of the present invention. Referring to Figure 4, the transcoder 100 converts an input video stream into an output video stream. To this end, the transcoder 100 may include a reconstruction unit 110, a selection unit 120, and an encoding unit 130.

The reconstruction unit 110 reconstructs transform coefficients and a video frame from the input video stream. The selection unit 120 selects one of a first frame, which is referred to by the video frame, and a second frame, which is located at a different position from the first frame, based on the sizes of the transform coefficients. The encoding unit 130 encodes the reconstructed video frame by referring to the selected frame.

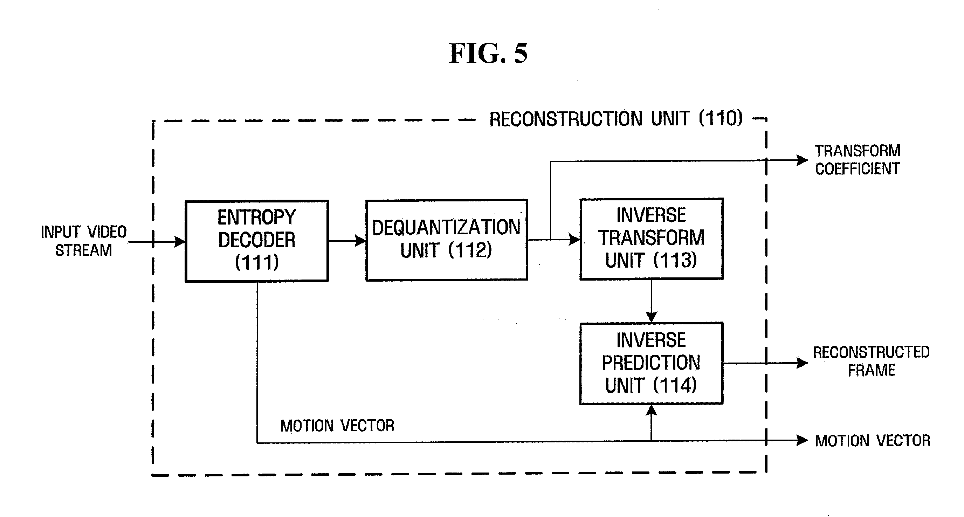

Figure 5 is a block diagram of the reconstruction unit 110 illustrated in Figure 4. Referring to Figure 5, the reconstruction unit 110 may include an entropy decoder 111, a dequantization unit 112, an inverse transform unit 113, and an inverse prediction unit 114.

The entropy decoder 111 losslessly decodes an input video stream using an algorithm, such as variable length decoding (VLD) or arithmetic decoding, and reconstructs a quantization coefficient and a motion vector.

The dequantization unit 112 dequantizes the reconstructed quantization coefficient.

This dequantization process is a reverse process of a quantization process performed by a video encoder. After the dequantization process, a transform coefficient can be obtained. The transform coefficient is provided to the selection unit 120.

The inverse transform unit 113 inversely transforms the transform coefficient using an inverse spatial transform method, such as an inverse discrete cosine transform (IDCT) or an inverse wavelet transform.

The inverse prediction unit 114 performs motion compensation on a reference frame for a current frame using the motion vector reconstructed by the entropy decoder 111, and generates a predictive frame. The generated predictive frame is added to the result of the inverse transform performed by the inverse transform unit 113. Consequently, a reconstructed frame is generated.

Referring back to Figure 4, the selection unit 120 determines whether to use the first frame, which was used as a reference frame in the input video stream, or use the second frame based on the transform coefficient provided by the reconstruction unit 110. To this end, the selection unit 120 calculates a threshold value based on the transform coefficient, and uses the calculated threshold value as a determination standard.

In this exemplary embodiment of the present invention, a method of using a fixed threshold value within a frame and a method of using a variable threshold value within a frame, in which a threshold value adaptively varies so that the threshold value can be applied in real time, will be used as examples.

Method of Using a Fixed Threshold Value

In this exemplary embodiment, a threshold value $TH_g$ is fixed in a single frame.

The threshold value $TH_g$ may be determined in various ways. For example, the threshold value $TH_g$ may be given by Equation (1).

$$TH_g = \frac{V_{ctl}}{N} \sum_{m=0}^{N-1} \sum_{i,j} |C_m(i,j)|$$

$$\ldots (1)$$

where N indicates the number of blocks in a frame, and $C_m(i,j)$ indicates a transform coefficient at the position of coordinates $(i,j)$ in an mth block. In addition, $V_{ctl}$ indicates a control parameter (default value = 1.0) which can control the size of the threshold value $TH_g$. Each block may have the size of a DCT block, which is a unit of a DCT transform, or the size of a macroblock, which is a unit of motion estimation.

If an index of a current block is k, a standard for selecting a reference frame, is as defined by Equation 2.

$$\boxed{\begin{array}{l} \text{If } ( \ \Sigma|C_k(i,j)| < TH_g ), \\ \qquad \text{Ref}_{orig} \text{ is selected as a reference frame,} \\ \qquad \text{or else } \text{Ref}_0 \text{ is selected as a reference frame.} \end{array}}$$

$$\ldots (2)$$

where $\Sigma|C_k(i,j)|$ denotes a sum of absolute values of transform coefficients included in the current block, $\text{Ref}_{orig}$ denotes a first frame used as the reference frame of the current block in an input video stream, and $\text{Ref}_0$ denotes a second frame located at a different position from the first frame. Preferably, the second frame may be an immediately previous frame of a frame (current frame) to which the current block belongs.

According to Equation (2), a frame closest to the current frame is selected as the reference frame of a block having greater energy than average. Therefore, a block having less energy than average uses a motion vector in the input video stream, whereas the block having greater energy than average uses a new motion vector calculated using a frame relatively closer to the current frame as the reference frame. In this way, an appropriate trade-off between image quality and transcoding speed can be found.

A method of calculating a threshold value by considering unprocessed blocks as well as processed blocks as in Equation (1) may require a rather large amount of calculation. Therefore, if an index of the current block to be processed is k, the threshold value $TH_g$ may also be calculated by considering currently processed blocks only as in Equation (3).

$$TH_g = \frac{V_{ctl}}{k} \sum_{m=0}^{k} \sum_{i,j} |C_m(i,j)| \qquad \ldots (3)$$

Blocks in units of which the selection unit 120 selects the reference frame may have different sizes from those of macroblocks to which motion vectors are actually allocated. In this case, it may be required to integrate or disintegrate the motion vectors.

Method of Using a Variable Threshold Value

In order to apply a transcoder in real time, it is very important whether the transcoder can process frames before a time limit. In real-time transcoding, a threshold value needs to be variably adjusted using a currently available calculation time as a factor. That is, a variable threshold value $TH_1$ may be calculated by multiplying a fixed threshold value $TH_g$ by a variable coefficient RTfactor as in Equation (4).

$$TH_l = TH_g * RTfactor \qquad \ldots (4)$$

According to Equation (4), when a time limit for processing a current frame is likely to be exceeded, the threshold value $TH_1$ may be increased, thereby increasing transcoding speed. If sufficient time is left before the time limit, the threshold value $TH_1$ may be reduced, thereby enhancing image quality.

The variable coefficient RTfactor may be determined in various ways. If an index of a block currently being processed and the remaining time before the time limit are factors to be considered, the variable coefficient RTfactor may be determined using Equation (5).

$$RTfactor = \frac{(N-k)/N}{(T_{due} - T_{cur}) * framerate} \qquad \ldots (5)$$

where k indicates an index number ($0 \leq k < N$) of the currently processed block, and N indicates a total number of blocks included in a frame. In addition, $T_{due}$ indicates a time by which the conversion of the current frame must be completed, $T_{cur}$ indicates a current time, and framerate indicates the number of frames per second during image reproduction. Framerate is a constant but is multiplied by ($T_{due}$-$T_{cur}$) in order to normalize ($T_{due}$-$T_{cur}$). Therefore, each of a numerator and a denominator in Equation (5) has a value between 0 and 1. According to Equation (5), the greater the number of blocks remaining to be processed in a current frame, the greater the variable coefficient RTfactor. Therefore, transcoding speed can be increased. In addition, the more time left before a time limit, the smaller the variable coefficient RTfactor. Therefore, transcoding speed can be decreased, which results in better image quality.

Similarly, the variable coefficient RTfactor may also be defined by Equation (6).

$$RTfactor = 1 + ((N-k)/N - (T_{due} - T_{cur}) * framerate) \qquad \ldots (6)$$

The selection unit 120 compares the fixed threshold value or the variable threshold value described above with the sum of absolute values of transform coefficients included in the current block and determines whether to use a motion vector and a reference frame (the first frame) of the input video stream or to calculate a motion vector by referring to a new frame (the second frame). Such a decision is made for each block and is provided to the encoding unit 130 as reference frame information.

A method of approximating a reverse motion vector to a forward motion vector is well known. Therefore, when the forward motion vector cannot be obtained, the reverse motion vector may be approximated to the forward motion vector, and the forward motion vector may be used instead of an existing motion vector and a reference frame. For example, if a macroblock of a B frame refers to a block of a P frame placed after the B frame, one of macroblocks of the P frame, which overlap the block, may be selected. That is, a macroblock overlapping a largest proportion of the block may be selected. Then, a motion vector of the selected macroblock for an I frame that precedes the P frame may be obtained. In this case, the motion vector for the I frame, which can be used by the B frame, may be a sum of a motion vector for the block of the P frame and the motion vector (for the I frame) of the largest overlapping macroblock of the P frame.

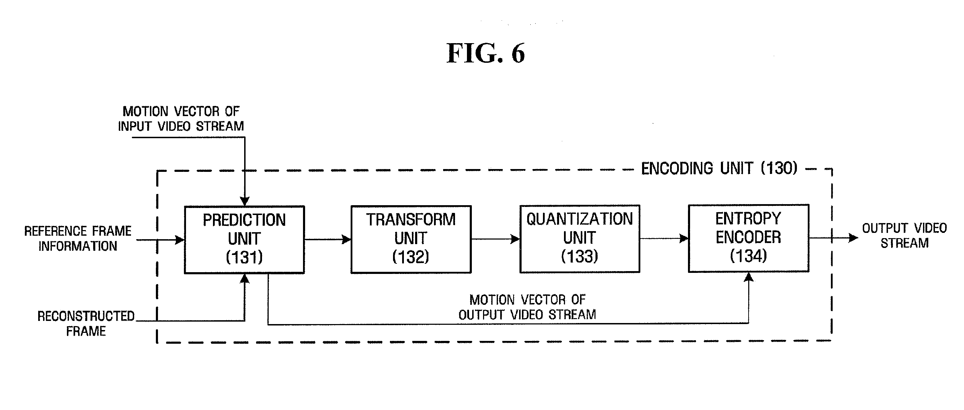

Figure 6 is a block diagram of the encoding unit 130 illustrated in Figure 4. Referring to Figure 6, the encoding unit 130 may include a prediction unit 131, a transform unit 132, a quantization unit 133, and an entropy encoder 134.

The prediction unit 131 obtains a motion vector for each block of a current frame using the reference frame information and using one of the first and the second frames as a reference frame. The first frame denotes a frame used as a reference frame of the current frame among frames reconstructed by the reconstruction unit 110. The second frame denotes a frame located at a different temporal position from the first frame.

When a block of the current frame uses the first frame as the reference frame, the prediction unit 131 allocates an existing motion vector of the input video stream to the block. If the block uses the second frame as the reference frame, the prediction unit 131 estimates a motion vector by referring to the second frame and allocates the estimated motion vector to the block.

In addition, the prediction unit 131 performs motion compensation on a corresponding reference frame (the first or the second frame) using motion vectors allocated to the blocks of the current frame and thus generates a predictive frame. Then, the prediction unit 131 subtracts the predictive frame from the current frame and generates a residual.

The transform unit 132 performs a spatial transform on the generated residual using a spatial transform method such as a DCT or a wavelet transform. After the spatial transform, a transform coefficient is obtained. When the DCT is used as the spatial transform method, a DCT coefficient is obtained. When the wavelet transform is used as the spatial transform method, a wavelet coefficient is obtained.

The quantization unit 133 quantizes the transform coefficient obtained by the transform unit 132, and generates a quantization coefficient. Quantization is a process of dividing a transform coefficient represented by a real number into sections represented by discrete values. A quantization method includes scalar quantization and vector quantization. In particular, the scalar quantization, which is relatively simple, is a process of dividing a transform coefficient by a corresponding value in a quantization table and rounding off the division result to the nearest integer.

The entropy encoder 134 losslessly encodes the quantization coefficient and the motion vector provided by the prediction unit 131 and generates an output video stream. A lossless encoding method used here may be arithmetic coding or variable length coding (VLC).

Each component described above with reference to Figures 4 through 6 may be implemented as a software component, such as a task, a class, a subroutine, a process, an object, an execution thread or a program performed in a predetermined region of a memory, or a hardware component, such as a Field Programmable Gate Array (FPGA) or Application Specific Integrated Circuit (ASIC). In addition, the components may be composed of a combination of the software and hardware components. The components may be reside on a computer-readable storage medium or may be distributed over a plurality of computers.

According to an exemplary embodiment of the present invention, an optimal reference frame can be selected when an input video stream is transcoded into a different format having a different GOP structure from that of the input video stream. Therefore, relatively high image quality or low bit rate can be achieved using limited computation power.

While the present invention has been particularly shown and described with reference to exemplary embodiments thereof, it will be understood by those of ordinary skill in the art that various changes in form and details may be made therein without departing from the scope of the present invention as defined by the following claims. The exemplary embodiments should be considered in descriptive sense only and not for purposes of limitation.

## Claims

1. A transcoder (100) for transcoding an input video stream into an output video stream, the transcoder (100) comprising:

   a reconstruction unit (110) configured to reconstruct transform coefficients and a video frame from the input video stream;

a selection unit (120) configured to select one of a first frame, which is referred to by the video frame, and a second frame, which is located at a different position from the first frame, based on sizes of the transform coefficients; and

an encoding unit (130) configured to encode the reconstructed video frame using the selected frame as a reference frame.

2. The transcoder of claim 1, wherein the second frame is located immediately before the video frame.

3. The transcoder of claim 1 or 2, wherein the input video stream is a Motion Picture Experts Group (MPEG) standard video stream, and the output video stream is an H.264 standard video stream.

4. The transcoder of any one of the preceding claims, wherein the selection unit (120) is configured to select the first frame as the reference frame for a block if a sum of absolute values of the transform coefficients for the block does not exceed a predetermined threshold value, and selects the second frame as the reference frame for the block if the sum of the absolute values of the transform coefficients for the block exceeds the predetermined threshold value.

5. The transcoder of claim 4, wherein the threshold value is obtained by dividing a sum of absolute values of transform coefficients included in a single frame by the number of blocks.

6. The transcoder of claim 4, wherein the threshold value is obtained by dividing a sum of absolute values of transform coefficients included in currently processed blocks among transform coefficients included in a single frame by the number of the currently processed blocks.

7. The transcoder of claim 4, wherein the threshold value is obtained by multiplying a value, which is obtained by dividing a sum of absolute values of transform coefficients included in a single frame by the number of blocks, by a predetermined variable coefficient, and the variable coefficient is determined by the number of blocks remaining to be processed in the single frame and a remaining time before a time limit.

8. The transcoder of claim 7, wherein the variable coefficient is obtained by dividing a value, which is obtained by dividing the number of the remaining blocks by the number of the blocks included in the single frame, by a value, which is obtained by multiplying the remaining time by a frame rate.

9. The transcoder of any one of the preceding claims, wherein the encoding unit (130) uses a motion vector of the input video stream if the selected frame is the first frame, and estimates a motion vector by referring to the second frame if the selected frame is the second frame.

10. The transcoder of any one of the preceding claims, wherein the reconstruction unit (110) comprises:

an entropy decoder (111) configured to decode the input video stream, and reconstruct quantization coefficients and motion vectors;
a dequantization unit (112) configured to dequantize the quantization coefficients to obtain the transform coefficients;
an inverse transform unit (113) configured to inversely transform the transform coefficients; and
an inverse prediction unit (114) configured to perform motion compensation on the reference frame using the motion vectors to generate a predictive frame, and generate the reconstructed video frame by adding the predictive frame to the result of the inverse transform.

11. The transcoder of any of the preceding claims, wherein the encoding unit (130) comprises:

a prediction unit (131) configured to obtain motion vectors allocated to blocks of the reconstructed video frame using one of the first and the second frames as the reference frame, perform motion compensation on the reference frame using the motion vectors to generate a predictive frame, and generate a residual by subtracting the predictive frame from the reconstructed video frame;
a transform unit (132) configured to perform a spatial transform on the residual to obtain the transform coefficients;
a quantization unit (133) configured to quantize the transform coefficients to generate quantization coefficients; and
an entropy encoder (134) configured to encode the quantization coefficients and the motion vectors to generate the output video stream.

**12.** A method of transcoding an input video stream into an output video stream, the method comprising:

reconstructing transform coefficients and a video frame from the input video stream;
selecting one of a first frame, which is referred to by the video frame, and a second frame, which is located at a different position from the first frame, based on sizes of the transform coefficients; and
encoding the reconstructed video frame using the selected frame as a reference frame.

**13.** The method of claim 12, wherein the second frame is located immediately before the video frame.

**14.** The method of claim 12 or 13, wherein the input video stream is a Motion Picture Experts Group (MPEG) standard video stream, and the output video stream is an H.264 standard video stream.

**15.** The method of any one of claims 12 to 14, wherein the selecting one of the first and the second frame comprises:

selecting the first frame as the reference frame for a block if a sum of absolute values of the transform coefficients for the block does not exceed a predetermined threshold value; and
selecting the second frame as the reference frame for the block if the sum of the absolute values of the transform coefficients for the block exceeds the predetermined threshold value.

**16.** The method of claim 15, wherein the threshold value is obtained by dividing a sum of absolute values of transform coefficients included in a single frame by the number of blocks.

**17.** The method of claim 15, wherein the threshold value is obtained by dividing a sum of absolute values of transform coefficients included in currently processed blocks among transform coefficients included in a single frame by the number of the currently processed blocks.

**18.** The method of claim 15, wherein the threshold value is obtained by multiplying a value, which is obtained by dividing a sum of absolute values of transform coefficients included in a single frame by the number of blocks, by a predetermined variable coefficient, and the variable coefficient is determined by the number of blocks remaining to be processed in the single frame and a remaining time before a time limit.

**19.** The method of claim 18, wherein the variable coefficient is obtained by dividing a value, which is obtained by dividing the number of the remaining blocks by the number of the blocks included in the single frame, by a value, which is obtained by multiplying the remaining time by a frame rate.

**20.** The method of any one of claims 12 to 19, wherein the encoding the reconstructed video frame comprises using a motion vector of the input video stream if the selected frame is the first frame, and estimating a motion vector by referring to the second frame if the selected frame is the second frame.

# FIG. 1A

| ----▶ | : REFERENCE |
| — · — | : GOP BOUNDARY |

GOP

| B | | I | B | B | P | B | B | | I |

# FIG. 1B

| ----▶ | : REFERENCE |
| — · — | : GOP BOUNDARY |

| P | | I | P | P | P | P | P | | I |

# FIG. 2A

# FIG. 2B

## FIG. 3A

## FIG. 3B

# FIG. 4

EP 1 838 105 A1

TRANSCODER (100)

MOTION VECTOR

INPUT VIDEO STREAM → 

| RECONSTRUCTION UNIT (110) |
| SELECTION UNIT (120) |
| ENCODING UNIT (130) |

TRANSFORM COEFFICIENT

REFERENCE FRAME INFORMATION

→ OUTPUT VIDEO STREAM

RECONSTRUCTED FRAME

**FIG. 5**

RECONSTRUCTION UNIT (110)

INPUT VIDEO STREAM → ENTROPY DECODER (111) → DEQUANTIZATION UNIT (112) → INVERSE TRANSFORM UNIT (113) → TRANSFORM COEFFICIENT

INVERSE TRANSFORM UNIT (113) → INVERSE PREDICTION UNIT (114) → RECONSTRUCTED FRAME

ENTROPY DECODER (111) → MOTION VECTOR → INVERSE PREDICTION UNIT (114)

MOTION VECTOR

# FIG. 6

MOTION VECTOR OF
INPUT VIDEO STREAM

ENCODING UNIT (130)

REFERENCE FRAME
INFORMATION

| PREDICTION UNIT (131) | TRANSFORM UNIT (132) | QUANTIZATION UNIT (133) | ENTROPY ENCODER (134) |

OUTPUT VIDEO
STREAM

MOTION VECTOR OF
OUTPUT VIDEO STREAM

RECONSTRUCTED
FRAME

EP 1 838 105 A1

**European Patent Office**

## EUROPEAN SEARCH REPORT

Application Number

EP 07 10 2560

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KAI-TAT FUNG ET AL: "Low Complexity H.263 to H.264 Video Transcoding using Motion Vector Decomposition" CIRCUITS AND SYSTEMS, 2005. ISCAS 2005. IEEE INTERNATIONAL SYMPOSIUM ON KOBE, JAPAN 23-26 MAY 2005, PISCATAWAY, NJ, USA,IEEE, 23 May 2005 (2005-05-23), pages 908-911, XP010815691 ISBN: 0-7803-8834-8 * abstract; figures 2,4 * * paragraphs [0002] - [0004] * ----- | 1-20 | INV. H04N7/26 H04N7/36 |
| X | EP 1 032 213 A2 (MATSUSHITA ELECTRIC IND CO LTD [JP]) 30 August 2000 (2000-08-30) * abstract; claims 7,28; figures 9,12 * * paragraphs [0003] - [0005], [0012], [0013], [0058] - [0065], [0072] - [0074] * ----- | 1,12 | |
| A | WO 2004/093461 A (KONINKL PHILIPS ELECTRONICS NV [NL]; BURAZEROVIC DZEVDET [NL]) 28 October 2004 (2004-10-28) * abstract; figures 2,3 * * page 4, paragraph 1 - page 7, paragraph 3 * * page 12, paragraph 1 - page 14, paragraph 3 * ----- | 1-20 | **TECHNICAL FIELDS SEARCHED (IPC)** H04N |
| A | US 2005/175099 A1 (SARKIJARVI JUHA [FI] ET AL) 11 August 2005 (2005-08-11) * the whole document * ----- | | |
| A | WO 02/056598 A (KONINKL PHILIPS ELECTRONICS NV [NL]; BARRAU ERIC [NL]) 18 July 2002 (2002-07-18) * the whole document * ----- | 1-20 | |

The present search report has been drawn up for all claims

| Place of search | Date of completion of the search | Examiner |
|---|---|---|
| Munich | 21 August 2007 | Cakiroglu, Seda |

## ANNEX TO THE EUROPEAN SEARCH REPORT
## ON EUROPEAN PATENT APPLICATION NO.

EP 07 10 2560

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2007

| Patent document cited in search report | | Publication date | Patent family member(s) | | Publication date |
|---|---|---|---|---|---|
| EP 1032213 | A2 | 30-08-2000 | DE | 60027495 T2 | 28-09-2006 |
| | | | JP | 2000244921 A | 08-09-2000 |
| | | | US | 6798837 B1 | 28-09-2004 |
| WO 2004093461 | A | 28-10-2004 | CN | 1774930 A | 17-05-2006 |
| | | | JP | 2006524000 T | 19-10-2006 |
| | | | KR | 20050112130 A | 29-11-2005 |
| | | | US | 2007036218 A1 | 15-02-2007 |
| US 2005175099 | A1 | 11-08-2005 | WO | 2005076626 A1 | 18-08-2005 |
| WO 02056598 | A | 18-07-2002 | JP | 2004518342 T | 17-06-2004 |
| | | | US | 2003035488 A1 | 20-02-2003 |

For more details about this annex : see Official Journal of the European Patent Office, No. 12/82